# EUROPEAN PATENT SPECIFICATION

(11) **EP 1 050 494 B1**
(45) Date of publication and mention of the grant of the patent: **24.11.2004**
(21) Application number: 00107236.2
(22) Date of filing: 03.04.2000
(51) Int. Cl.: B65G 47/08

(54) **Method and device for positioning products in a stationary operating position**
Verfahren und Vorrichtung zum Positionieren von Produkten in einer stationären Betriebstellung
Procédé et dispositif pour positionner des produits dans une position opérationnelle stationnaire

(30) Priority: 07.04.1999 SV 9901224
(43) Date of publication of application: 08.11.2000
(73) Proprietor: Johansson, Per, 241 32 Eslöv (SE)
(72) Inventor: Johansson, Per, 241 32 Eslöv (SE)
(74) Representative: Ström, Tore

(56) References cited:
- EP-A- 0 613 838
- EP-A- 0 943 562
- WO-A-97/15514

## Description

The invention relates to a method and device for positioning products in a stationary operating position.

The method is principally of the kind disclosed in EP-A-0 501 382 wherein the products by means of a delivery conveyer are delivered to an endless pick-up conveyer which has compartments for the products uniformly distributed in the longitudinal direction of the pick-up conveyer, and are advanced stepwise on the pick-up conveyer with the step length corresponding to the centre distance between the compartments, the products being supplied to the compartments by means of the delivery conveyer in the transverse direction of the pick-up conveyer and the end of the delivery conveyer connecting to the pick-up conveyer being displaced stepwise along the pick-up conveyer in a direction opposite to the moving direction thereof, while the pick-up conveyer is stationary in the operating position.

According to EP-A-0 501 382 the endless pick-up conveyer is stationary when the products are supplied to the compartments in the pick-up conveyer because an end portion of the delivery conveyer, which connects to the pick-up conveyer and can be swung over a curved portion of the pick-up conveyer, is swung from one compartment to another. Then, the pick-up conveyer is advanced a distance corresponding to a certain number of products which are then removed from the pick-up conveyer when this is stationary.

The method according to the invention differs according to claim 1 from the method applied according to EP-A-0 501 382 in that the pick-up conveyer after positioning of the products in the stationary operating position is advanced stepwise to receive the products supplied by the delivery conveyer, while the end of the delivery conveyer which connects to the pick-up conveyer is held in a stationary position. As a consequence thereof a more rapid positioning of the products is achieved than that which can be achieved when the device operates as described in EP-A-0 501 382.

In order to explain the invention in more detail an illustrative embodiment thereof will be described below reference being made to the accompanying drawings in which,
FIG. 1 is a diagrammatic side view of the pick-up conveyer,
FIG. 2 is a plan view of the pick-up conveyer in Fig. 1 and the delivery conveyer co-operating therewith, and
FIG. 3 to Fig. 8 are diagrammatic plan views in a reduced scale of the pick-up conveyer and the delivery conveyer and illustrates several steps in the handling of the products according to the method of the invention.

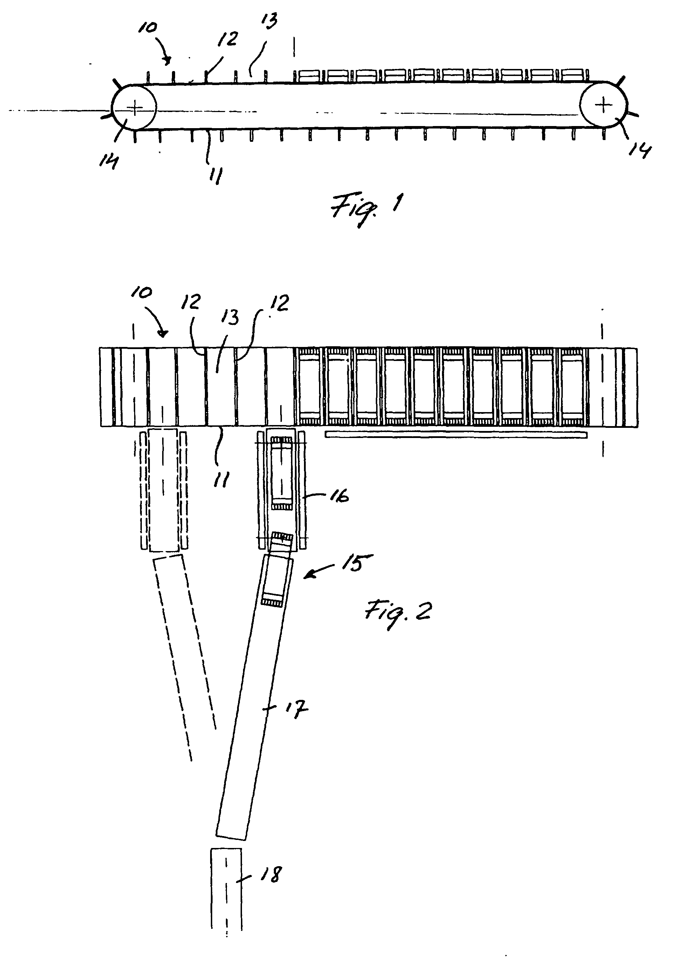

The device according to Figs. 1 and 2 comprises a pick-up conveyer 10, in the following referred to as collector, which includes an endless belt 11 with transverse carrier plates 12 projecting from the belt, said carrier plates being uniformly spaced over the belt and define compartments 13 between carrier plates located adjacent each other. The endless belt is passed over turning rolls 14 one of said rolls being drivingly connected to a step motor (not shown in Figs. 1 and 2) for advancing the belt 11 stepwise at a step length corresponding to the centre distance between the compartments 13.

The device comprises also a delivery conveyer 15 which is constructed as a sectioned conveyer. The end section 16 is mounted perpendicularly to the collector 10, and the supporting upper belt run thereof is at the same level as the supporting upper belt run of the belt 11 and has a width substantially corresponding to the width of the compartments 13. The end section is in a manner not shown in more detail herein guided for parallel displacement along the collector, and means (not shown in Figs. 1 and 2) are provided for effecting this displacement stepwise in both directions. The end section 16 is articulated to one end of an intermediate section 17 of the delivery conveyer while the other end of the intermediate section is articulated to an entrance section 18. In Fig. 2 the delivery conveyer is shown by solid lines in an end position to the right and by dotted lines in an end position to the left.

The method according to the invention when practised by means of the device according to Figs. 1 and 2 as described above shall now be described with reference to Figs. 3 to 8 it being assumed that packages of some kind shall be transferred to the collector by means of the delivery conveyer in order then to be removed from the collector in groups of six packages for further operation e.g. to be put down into a box. The removal can be effected by means of suction cups (or lifting means of another kind) which lift the packages from the collector, or by means of a stripper which pushes the packages from the collector. In Figs. 3 to 8 there is diagrammatically disclosed a means 19 of said latter kind. In Figs. 3 to 8 the packages have been referenced **a, b, c, d,** etc.

In Fig. 3 the collector 10 is assumed to be moving and to be advanced step by step at a step length which corresponds to the centre distance between the compartments 13. Four packages **a, b, c, d** have been located in compartments on the collector, and two packages **e** and **f** are located on the end section 16 of the delivery conveyer.

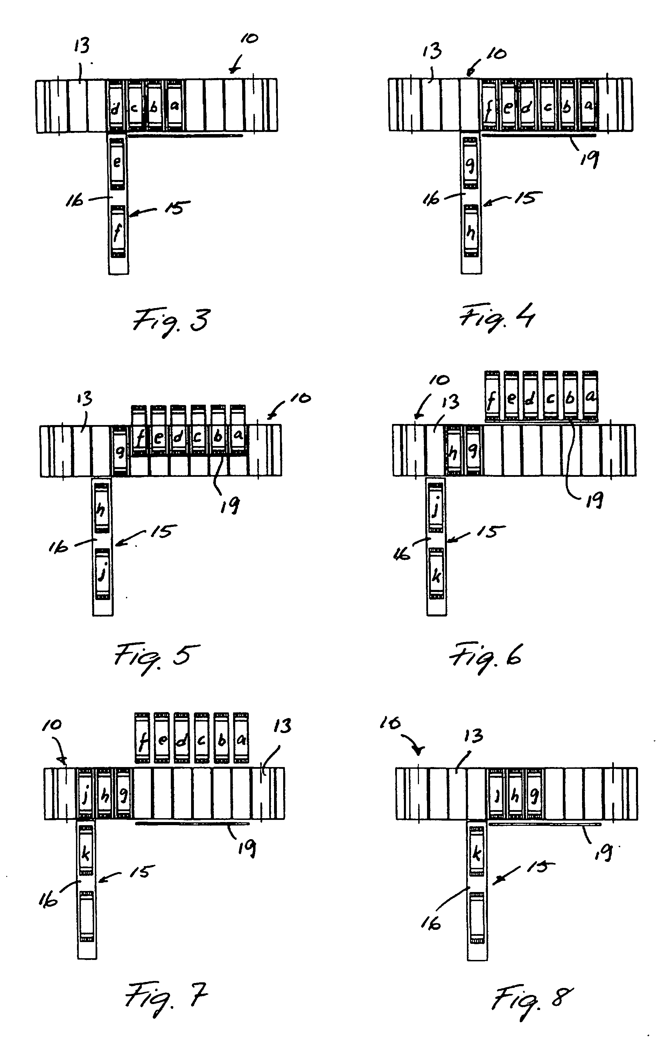

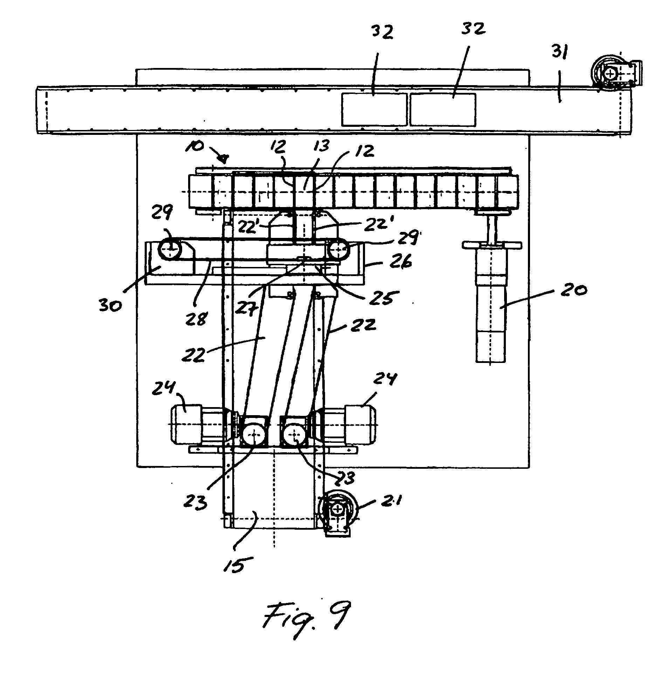

In Fig. 4 also the packages **e** and **f** have been delivered to the collector, and an empty compartment is located in front of the section 16. The packages **a-f** are in register with the stripper 19. The movement of the collector will be stopped and a further package **g** will be delivered to the collector. The stripper 19 initiates the movement thereof in order to push the six packages **a-f** located in the stationary operating position, from the collector, Fig. 5. During the period when the collector is stationary the section 16 is stepped to the left, i.e. in the direction opposite to the moving direction of the collector, now stationary, and a package **h** is delivered to the collector in the empty compartment in register with the section 16, Figs. 5 and 6. The stripper has reached the end position thereof, and the six packages **a-f** have been removed from the collector, and then the stripper returns while the section 16 moves a further step to the left, Fig. 6, and delivers a further package **j** to the collector, Fig. 7. Advancement of the collector is now initiated again the section 16 at the same time stepping back at the same speed as the collector to the starting position thereof, Fig. 8, in order to push a package **k** into the registering compartment. The operating cycle is now back to the condition in Fig. 3.

By using modern computerized control technique the operation of the collector 10 and the displacement of the end section 16 of the delivery conveyer 15 in predetermined steps can easily be correlated in order to achieve the operation described. It is presupposed that the packages arrive at the delivery conveyer at a certain smallest spacing between the packages. The stepwise movement of the collector 10 and the displacement of the end section 16 is matched to the frequency at which the packages arrive at the collector by sensing the arrival of the packages at a delivery position by means of a photocell. In Fig. 4 the package **g** is in delivery position, in Fig. 5 the package **h**, in Fig. 6 the package **j**, and in Fig. 8 the package **k**.

The invention is of course not limited to the use in package systems. For example some form of machining of the products can instead be concerned, while the products are located in the stationary operating position in which the pick-up conveyer is stationary.

## Claims

1. Method for positioning products in a stationary position, wherein the products by means of a delivery conveyer (15) are delivered to an endless pick-up conveyer (10) which has compartments (13) for the products uniformly distributed in the longitudinal direction of the pick-up conveyer, and are advanced stepwise on the pick-up conveyer with the step length corresponding to the centre distance between the compartments, the products being supplied to the compartments by means of the delivery conveyer (15) in the transverse direction of the pick-up conveyer (10) and the end of the delivery conveyer connecting to the pick-up conveyer being displaced stepwise along the pick-up conveyer in a direction opposite to the moving direction thereof, while the pick-up conveyer is stationary in the operating position, **characterized in that** the pick-up conveyer (10) after positioning of the products in the stationary operating position is advanced stepwise to receive the products supplied by the delivery conveyer, while said end of the delivery conveyer is held in a stationary position.

## Patentansprüche

1. Verfahren zur Positionierung von Produkten in einer stationären Position, bei welchem die Produkte mittels eines Zufuhr-Förderers (15) zu einem Aufnahme-Förde-rer (10) geführt werden, der Fächer (13) für die Produkte hat, welche in der Längsrichtung des Aufnahme-Förderers gleichmäßig verteilt sind, und schrittweise auf dem Aufnahme-Förderer vorwärts bewegt werden, wobei die Schrittlänge dem Mittelabstand zwischen den Fächern entspricht, wobei die Produkte den Fächern durch den Zufuhr-Förderer (15) in der Querrichtung des Aufnahme-Förderers (10) zugeführt werden und das Ende des Zufuhr-Förderers, welches die Verbindung zu dem Aufnahme-Förderer herstellt, schrittweise entlang des Aufnahme-Förderers in einer zu dessen Bewegungsrichtung entgegengesetzten Richtung verstellt wird, während der Aufnahme-Förderer in der Betriebsstellung stationär ist, **dadurch gekennzeichnet, daß** der Aufnahme-Förderer (10), nachdem die Produkte in der stationären Betriebsstellung positioniert worden sind, schrittweise vorbewegt wird, um die Produkte, welche durch den Zufuhr-Förderer zugeführt werden, aufzunehmen, während das Ende des Zuführ-Förderers in einer stationären Position gehalten wird.

## Revendications

1. Procédé de positionnement de produits dans une position stationnaire, dans lequel les produits sont amenés au moyen d'un convoyeur d'apport (15) à un convoyeur collecteur sans fin (10) qui a des compartiments (13) pour les produits distribués de manière uniforme selon la direction longitudinale du convoyeur collecteur, et sont avancés pas à pas sur le convoyeur collecteur, la longueur de pas correspondant à la distance centrale entre les compartiments, les produits étant amenés aux compartiments au moyen du convoyeur d'apport (15) dans la direction transversale du convoyeur collecteur (10) et l'extrémité du convoyeur d'apport reliée au convoyeur collecteur étant déplacée pas à pas le long du convoyeur collecteur dans une direction opposée à la direction de déplacement de celui-ci, tandis que le convoyeur collecteur est stationnaire dans la position de fonctionnement, **caractérisé en ce que** le convoyeur collecteur (10) après le positionnement des produits dans la position de fonctionnement stationnaire est avancé pas à pas pour recevoir les produits amenés par le convoyeur d'apport, tandis que ladite extrémité du convoyeur d'apport est maintenue dans une position stationnaire.
